# EUROPEAN PATENT APPLICATION

(11) **EP 2 975 756 A1**
(43) Date of publication of application: **20.01.2016**
(21) Application number: 14176884.6
(22) Date of filing: 14.07.2014
(51) Int. Cl.: H02M 7/5387, H02M 1/12

(54) **Three-phase inverter with actively switched capacitors in LC line filter**

(71) Applicant: ABB Technology AG, 8050 Zürich (CH)
(72) Inventor: Li, River-TinHo, Diamond Hill (HK); Ho, Carl Ngai-Man, 6512 Giubiasco (CH); Huusari, Juha, 8003 Zürich (CH); Bianda, Enea, 5400 Baden (CH)
(74) Representative: ABB Patent Attorneys

(57) **Abstract**

A direct current, DC, to alternating current, AC, inverter (100) for inverting a direct current of a power generator (10) to a three-phase alternating current of a three-phase grid (20) is provided. The DC to AC inverter (100) comprises a primary side (110) with a first DC input line (112A) and a second DC input line (112B), a secondary side (120) with a first AC output phase (122A), a second AC output phase (122B), and a third AC output phase (122C), and a filter component (104) for connecting the secondary side (120) to the primary side (110) via a return line (150). The filter component comprises a first capacitive element (132A) and a first switching element (142A) connected to the return line. The first AC output phase (122A) is connected to the first capacitive element (132A) and the first switching element (142A).

## Description

### FIELD OF THE INVENTION

The invention relates to the field of power conversion. In particular, the invention relates to a three-phase DC to AC inverter. In more particular, the invention relates to a DC to AC inverter for interconnecting renewable energy generators to a three-phase grid or for applications of uninterrupted power supply (UPS).

### BACKGROUND OF THE INVENTION

Power inverters are used for interconnecting a first power network to a second power network and for inverting a voltage and/or current value of the first power network to a desired value of the second power network. Additionally, a frequency of the current may be inverted or converted. For example, a DC power provided by a photovoltaic power source is converted for feeding the power into a power grid, in particular a three-phase AC power grid.

Available solutions for this purpose can be mainly categorized into either modular or non-modular inverter systems. The modular approach is using more than one complete power conversion stages (namely module), to formulate a complete high power system. Each of the modules has the ability of power conversion and is able to work independently. This approach is mainly targeting on high efficiency and reliability.

Advantages of a system with modular approach are higher flexibility and redundancy. For instance the number of modules under operation can be optimized or reduced based on the load conditions so as to achieve the maximum efficiency. The system is still working, with reduced power, if one of the modules fails. The key disadvantage of a system with modular approach may be higher cost. It is because a number of components, such as controller, semiconductors, magnetics, capacitors, relay, metal case, cables for interconnection and etc., are shareable or reducible.

The non-modular approach is using one or one set of power converter(s) / inverter(s) to formulate the complete system. There is no equivalent module connected in paralleled to increase the power rating and form a complete system. Power stage topology development is the key topic to advance the performance, including efficiency and functionality, and cost reduction for this approach.

Six-switch voltage source inverter (VSI) is a very traditional topology and broadly used technology due to the fact that the circuit topologies and the corresponding control method are simple, reasonable good in efficiency and cost, low technology risk and robust. It is well-suitable and popular for low voltage, below 1kV, applications in general because of the advancement and availability of the semiconductors. The disadvantage of these topologies may be relatively large inductor size and thus the weight of the system is relatively heavy. An example of such a switch is described in US 7,710,752 B2.

Further technologies of power inverters and related approaches are described in:
US 4,135,235;
A. Nabae, I. Takahashi and H. Akagi, "A New Neutral-Point-Clamped PWM Inverter" IEEE Trans. Industry Electron., vol. 17, no. 5, Sept./ Oct. 1981. pp. 518-523;
CN 101197547 B;
M. Schweizer and J. W. Kolar, "Design and Implementation of a High Efficient Three-Level T-type Converter for Low Voltage Applications", IEEE Trans. Power Electron., vol. 28, no.2, Feb. 2013, pp. 899-907;
CN 102118035 A;
J. Rodriguez, J. S. Lai and F. Z. Peng, "Multilevel Inverters: A Survey of Topologies, Controls and Applications", IEEE Trans. Industrial Electron., vol. 49, no.4, August. 2002, pp. 724-738;
Photon, PHOTON Publishing GmbH, Jülicher Str. 376, 52070 Aachen, Germany, December 2011, pp. 141 and 145; and
CN 102769401 A.

### DESCRIPTION OF THE INVENTION

It is an object of the invention to provide a DC to AC inverter with reduced weight whereas other parameters like power inversion efficiency are not reduced.

This object is achieved by the subject-matter of the independent claim. Further exemplary embodiments are described in the dependent claims and in the following description.

An aspect of the invention relates to a direct current (DC) to alternating current (AC) inverter for inverting a direct current of a power generator to a three-phase alternating current of a three-phase grid. The inverter comprises a primary side with a first DC input line and a second DC input line, a secondary side with a first AC output phase, a second AC output phase, and a third AC output phase, and a filter component for connecting the secondary side to the primary side via a return line. The filter component comprises a first capacitive element and a first switching element connected to the return line. The first AC output phase is connected to the first capacitive element and the first switching element.

By using the filter component with the capacitive element connected to the return line via a switching element which, in one embodiment, is controlled with a predefined switching scheme described in more detail below, output filter inductors of the inverter circuits can be reduced and weight can be saved up compared with the approaches known from the prior art. For example, the output filter inductors and their weight can reduced by up to 30% to 40% comparing to the prior art DC to AC inverter circuits with comparable specifications or performance characteristics. Additionally, the proposed inverter circuits include lower switching loss, lighter system weight, lower bill of materials (BOM) cost, retained robustness and functions of the inverters such as maximum power point trackings (MPPTs) and reactive power delivery.

Large magnetic components, such as a filter inductor of an inverter circuit, may impose a high weight to grid-connected power electronics inverters. It may be desirable to shrink the size and weight of filter inductors without degrading the performance such as efficiency, current quality, dynamic response, etc. This is obtained by an inverter with a filter component as described above and hereinafter. The basic idea is to configure the output filter structure actively via a capacitive element and a switching element.

A switching scheme is described in more detail below to maximize the filter attenuation ability. The circuit results in low differential mode (DM) and common mode (CM) currents and therefore can achieve the target of filter inductor size reduction.

In general, the proposed techniques are not dependent on the topology of an inverter and it can be applied to different prior art inverter circuits. As a result, robustness of the power conversion stage is made possible. In conclusion, the proposed technique can improve the performance of prior art dc/ac inverter circuits by smaller size and lower weight of filter inductor, lower switching loss, smaller DM current ripple and CM current and retained the robustness of the power converter stage.

The filter component can be reconfigured to a third-order configuration without adding additional inductor. Due to the high order filter, grid side current ripple is significantly reduced and thus the required inductance is also reduced. At the same time, the proposed techniques can also suppress the high frequency common mode (CM) current which is another key issue has to be concern, for example in photovoltaic inverter topology design. Another merit from the proposed techniques is that it can be applied to different topologies and reduce switching loss.

The return line may comprise one wire or a multitude of wires which electrically connect the secondary side to the primary side.

According to an embodiment of the invention, the first capacitive element and the first switching element are connected in series.

Thus, a current flow through the first capacitive element can be controlled by means of the switching status of the first switching element and a filter function of the first capacitive element can be controllably activated in a closed status of the switching element.

According to a further embodiment of the invention, the return line is connected to the first DC input line.

In particular, one or more of the wires of the return line may be connected to any point of the primary side, e.g. the first DC input line or the second DC input line.

According to a further embodiment of the invention, the return line is connected to the second DC input line.

Thus, the return line may be connected to DC plus or DC minus. Depending on the design of the inverter and the position of the components, the one or the other may be easier to get connected to.

According to a further embodiment of the invention, one or more of the wires of the return line may be connected to a capacitor connected in series between the first DC input line and the second DC input line.

In a further embodiment of the invention, one or more of the wires of the return line may be connected to an intermediate point of at least two series-connected capacitor units connecting the first DC input line and the second DC input line. In other words, the return line is connected to a point between the two capacitor units which connect the first and the second DC input line.

According to a further embodiment of the invention, the filter component comprises a second capacitive element and a second switching element connected to the return line, wherein the second AC output phase is connected to a second capacitive element and a second switching element, wherein the second capacitive element and the second switching element are connected in series.

The first capacitive element and first switching element may form a first branch for connecting the first AC output phase to the return line whereas the second capacitive element and the second switching element may form a second branch for connecting the second AC output phase to the return line such that the first and the second AC output phase are connected to the DC source via the same return line.

According to a further embodiment of the invention, the filter component comprises a third capacitive element and a third switching element connected to the return line, wherein the third AC output phase is connected to a third capacitive element and a third switching element, wherein the third capacitive element and the third switching element are connected in series.

Similar to the first and second branches, the third capacitive element and a third switching element form a third branch for connecting the third AC output phase to the DC source via said return line.

According to a further embodiment of the invention, the return line may be connected to a neutral point of the DC source, i.e. to a mean voltage value between the DC minus value and the DC plus value.

According to a further embodiment of the invention, the inverter further comprises a control unit. The control unit comprises a first control subunit for controlling an inverter component of the inverter and a second control subunit for controlling the filter component, wherein the second control subunit is configured to control a switching status of the first switching element.

Thus, the switching status of the first switching element and the status of the switches of the inverter can be synchronized by the control unit, i.e. by the first control subunit and the second control subunit.

According to a further embodiment of the invention, the second control subunit is configured to control the switching status of the first switching element based on a voltage value of at least one of the first AC output phase, second AC output phase, and third AC output phase.

Alternatively, the switching status of the first switching element may be controlled based on a current value or a power value of at least one of the first AC output phase, second AC output phase, and third AC output phase.

According to a further embodiment of the invention, the first control subunit is connected to the second control subunit and the control unit is configured to synchronize a switching pattern of the first switching element with a switching pattern of the inverter component.

In order to achieve a proper filter functioning and attenuation of the filter component at the secondary side of the DC/AC inverter, such a synchronization may be helpful.

According to a further embodiment of the invention, the control unit is configured to periodically repeat the synchronized switching patterns of the inverter component and the filter component.

The switches of the inverter may be referred to as main switches and the switches of the filter component may be referred to as auxiliary switches. The second control subunit controls the switching status of the auxiliary switches and the first control subunit controls the switching status of the main switches. The switching status of the main and auxiliary switches repeats periodically in correspondence to the periodic current of the AC output phases.

According to a further embodiment of the invention, the inverter comprises a control unit with a first control subunit for controlling an inverter component of the inverter and a second control subunit for controlling the filter component. The second control subunit is configured to control a switching status of the filter component such that at a given time t during an operation status of the inverter at most two switches of the first switching element, the second switching element, and the third switching element are in a closed state.

In other words, at any time t during an operation status of the inverter at least one switch of the first switching element, the second switching element, and the third switching element is in an opened state.

According to a further embodiment of the invention, the second control subunit is configured to control the switching status of the filter component such that at any given time t during an operation status of the inverter at least one switch of the first switching element, the second switching element, and the third switching element is in an opened state.

The key focuses of near future grid-connected inverters are low cost and high efficiency. These are achieved by an inverter as described in this disclosure. Furthermore, light weight is highly recommended especially for photovoltaic inverter. The merits of the dc/ac inverter as described above and hereinafter has the following characteristics and enables the following advantages: smaller output filter inductor size and lower switching loss than the typical three-phase six-switch VSI or neutral point clamped (NPC) VSI; no low frequency (that is grid frequency and its harmonics) and suppressed high frequency (that is switching frequency and its harmonics) leakage currents; lower BOM cost and lighter weight than the prior art solutions due to the shrink of filter inductors; no additional inductor required; wide input voltage range.

The invention principle is based on controlling the output filter structure actively corresponding to a switching scheme and thus to achieve the mentioned merits.

As mentioned above, the size of the inverter inductor is one of the key elements driving or impacting the cost and weight of a DC to AC inverter. The inverter topology described herein may maximize the filter attenuation ability, therefore the required inductance and thus the size and cost of the inverter inductors can be reduced. For example at a switching frequency of 10 kHz with a filter inductor having 850 µH, the inductor size of prior art inverter increases with input voltage of the DC power source but not for the inverter with the filter component described herein. Moreover, the ripple current of the inverter described herein can be reduced. The required inductance of the inverter component may be up to 30% to 40% smaller than those from comparable prior art inverters.

The inverter circuit described herein is suitable for applications which require low cost, light weight, high power efficiency, high output current quality and low common mode leakage current, for instance three-phase grid-connected transformerless photovoltaic inverter and UPS. Due to a size reduction of the output filter inductor by about 30% to 40%, the BOM cost and weight of the system can be minimized and results in higher efficiency at the same time comparing to the prior art solutions. Therefore, the proposed inverter may be a cost-performance optimized inverter for grid-connection applications.

A DC to AC inverter may have a maximum power point tracking (MPPT) feature, which is a functional block in the control unit that outputs a reference value for the input voltage control loop of the inverter. In other words, the MPPT block enables maximum power yield of the DC power generator by guiding the inverter accordingly. The MPPT block can be realized in a number of different ways with different algorithms and nearly every algorithm is based on measurement of the DC power (i.e., voltage and current). These measurements are typically taken at given intervals, so that the actual output power of the DC generator at consecutive time instances can be compared. This allows monitoring the change in the DC power according to which the DC voltage can be adjusted. In one embodiment, the control system of a three-phase grid-connected DC to AC inverter essentially comprises three different control loops: i) the input voltage loop, ii) the direct channel current control loop and iii) the quadrature channel current control loop. The MPPT block itself can be seen as a control loop, but is it usually designed to act very slowly and thus it essentially provides constant voltage reference with respect to input voltage control loop. The control loop is designed to enable stable operation throughout the DC source or DC generator characteristic operating curve as well as to enable stable power injection despite changes in grid side. The inner control loops that are responsible for the current control are designed with high bandwidth and the outer control loop, regulating the input voltage, with a low bandwidth. The MPPT block yields the reference value for the input voltage and the actual input voltage controller and one functional block Gv outputs the peak value for the direct channel current. The direct and quadrature currents id, iq are obtained from the measured grid currents ia, ib, ic after a dq-transformation. Thus, the current control loops Gd, Gq operate in rotating reference frame Finally, physical gate signals for the main switches are obtained from a reverse dq-transformation of the control signal, which is then compared with a saw tooth carrier. The gate signals for the auxiliary switches are synchronized with the line voltages and do not include any direct control loop.

The inverter as described above and hereinafter can be used as a DC to AC inverter for grid-connected applications, particularly suitable for, but not limited to, renewable (such as photovoltaic power generators) and uninterrupted power supply (UPS) applications.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a DC to AC inverter according to an exemplary embodiment of the invention.
Fig. 2 schematically shows a DC to AC inverter according to a further exemplary embodiment of the invention.
Fig. 3 schematically shows a filter component of a DC to AC inverter according to a further exemplary embodiment of the invention.
Fig. 4 schematically shows a switching scheme of a DC to AC inverter according to a further exemplary embodiment of the invention.
Fig. 5 schematically shows a control unit of a DC to AC inverter according to a further exemplary embodiment of the invention.

The reference symbols used in the drawings, and their meanings, are listed in summary form in the list of reference symbols. In principle, identical or similar elements are provided with the same reference symbols in the figures.

### DETAILED DESCRIPTION OF EXEMPLARY EMBODIMENTS

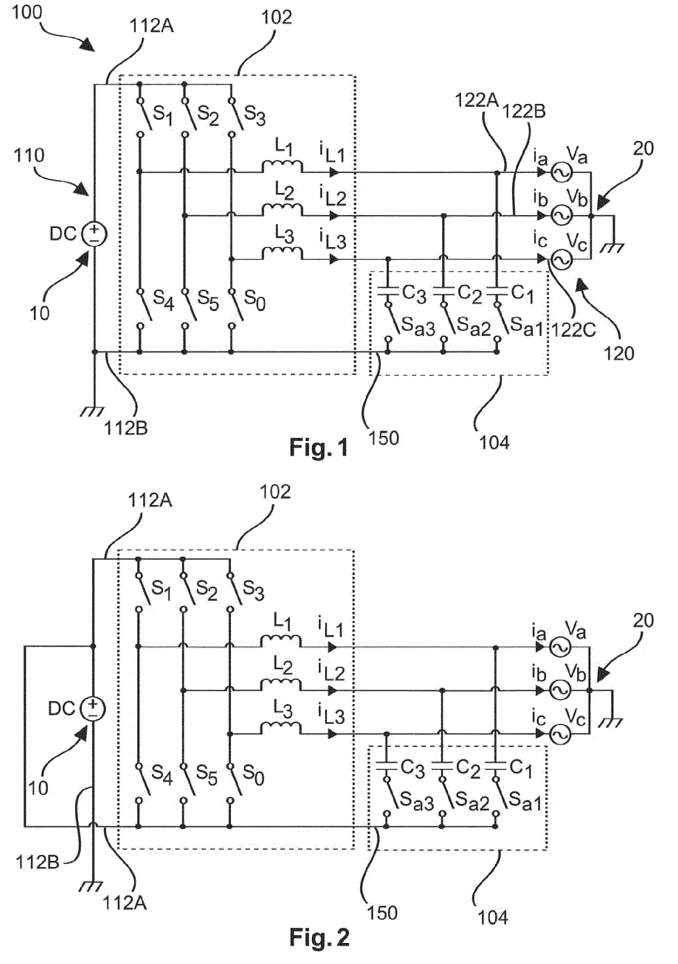

Fig. 1 shows a DC to AC inverter 100 with an inverter component 102 and a filter component 104. The inverter 100 is adapted to receive a DC power on a primary side 110 from a DC power source or DC power generator 10 via a first DC input line 112A and a second DC input line 112B (DC plus and DC minus, respectively).

The DC power generator 10 may be optionally connected to ground, for security reasons, for example.

The inverter component 102 may be a six switch VSI or any other type of DC to AC inverter having a primary side for receiving a DC current and a secondary side 120 for providing three-phase AC current via a first AC output phase 122A, a second AC output phase 122B, and a third AC output phase 122C to a three-phase grid 20.

The inverter component 102 comprises three inductors L1, L2, and L3, each of which is connected in series between the DC power source 10 and one of the AC output phases, respectively. Depending on the status of the main switches S1 to S6, the respective output phase is applied with a current, which is an AC current.

The filter component connects the AC output phases 122A, 122B, 122C via a return line 150 to the DC power source 10, for example to the second DC input line 112B (DC minus).

Providing a filter component 102 on the secondary side 120 of the inverter component 102 enables a reduction of the inductance and weight of the inductors L1 to L3. Therefore, smaller DC to AC inverters can be provided and may enable an easier installation, for example wall mounting.

The embodiment shown in Fig. 1 may further comprise one or more DC link capacitor units (not shown) connected in series between the first DC input line 112A and the second DC input line 112B.

Alternatively to connecting the return line to the first DC input line 112A or the second DC input line 112B, the return line 150 may be connected to any intermediate point between two adjacent DC link capacitor units.

Fig. 2 shows a DC to AC inverter 100 similar to that shown in Fig. 1. In contrary to Fig. 1, the return line 150 is connected to the first DC input line 112A (DC plus).

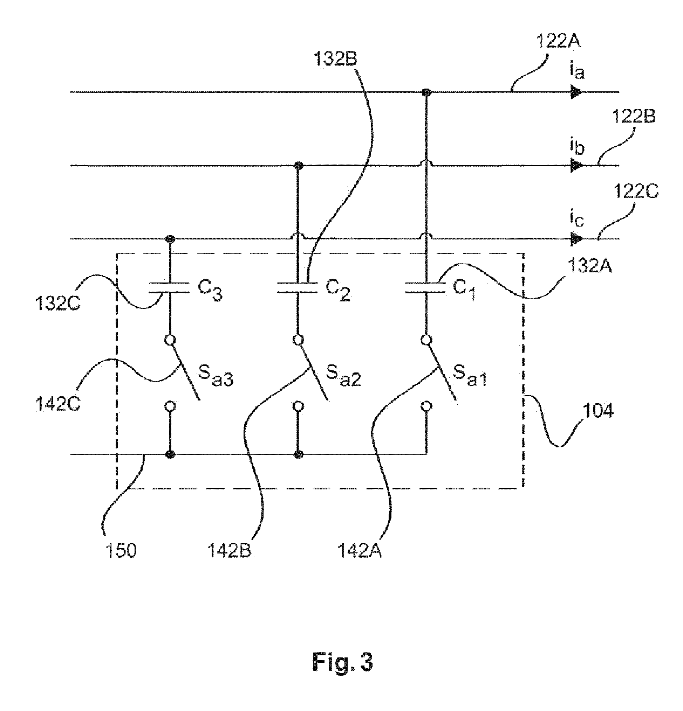

Fig. 3 shows a filter component 104 connected to the AC output phases of a DC to AC inverter.

A first branch (first capacitor 132A and first switching element 142A in series) connect the first AC output phase 122A to the return line 150. Similarly, a second branch (second capacitor 132B and second switching element 142B in series) connect the second AC output phase 122B to the return line 150 and a third branch (third capacitor 132C and third switching element 142C in series) connect the third AC output phase 122C to the return line 150.

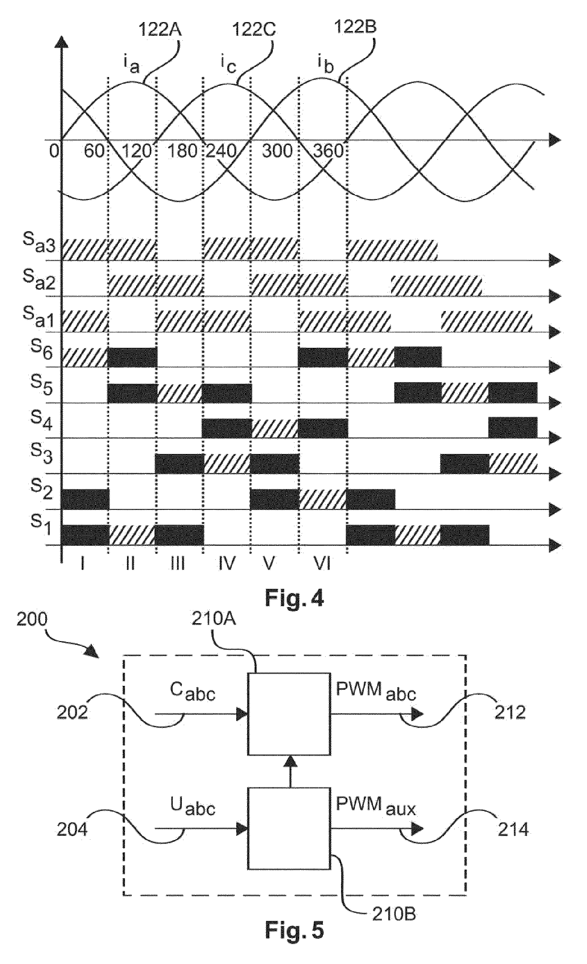

Fig. 4 shows a switching scheme of the switches of the filter component (auxiliary switches Sa1, Sa2, Sa3) in relation to the status of the switches of the inverter component (in this examples the main switches S1 to S6 of a six switch VSI). It should be noted that the filter component can be combined with any other inverter component which is adapted to invert a DC current to an AC current of a three phase grid.

The current values ia, ib, and ic of the first, second and third AC output phase 122A, 122B, and 122C are shown with reference to the status of the auxiliary switches.

One cycle of the three phase AC current comprising 360° is illustrated and splitted into six regions I, II, III, IV, V, VI of 60° (see dotted vertical lines), respectively. Depending on the region, two of the auxiliary switches are in a closed state (hatched areas) and the third auxiliary switch is in an opened state. For example, in region I (0°-60°) the switches Sa1 and Sa3 are in the closed state and Sa2 is in the opened state. In region II, Sa1 is opened and Sa2 and Sa3 are closed.

One of the auxiliary switches is held in the closed state for two subsequent regions or 120° whereas it remains in the opened state for 60°.

The main switches S1 to S6 are switching where a black rectangle appears and constantly on where a hatched area appears. It can be seen that there are only two main switches switching at any time and they are responsible to shape the current of two phases, the third phase current is the negative sum of the first two phases due to the fact of a three-phase AC grid system. S1 is responsible to shape the phase a current in the positive half cycle and S4 is responsible for the negative half cycle, respectively. The same principle is applying to the other two AC output phases.

In one embodiment, the elements of the inverter component and filter component may be characterized by the following parameters and/or values: DC voltage of the DC source about 600 V, L1=L2=L3 of 1 mH, C1=C2=C3 of 4 µF, power of the DC source of about 50 kW, Va=Vb=Vc of the AC output phases of 230 V at 50 Hz, switching frequency of the main switches in the regions of the black rectangles in Fig. 4 of 10 kHz.

Fig. 5 shows a control unit 200 with a first control subunit 210A and a second control subunit 210B. The first control subunit 210A is adapted to provide the switching signals of the main switches S1 to S6 based on a control signal 202. The second control subunit 210B is adapted to provide the switching signals of the auxiliary switches Sa1, Sa2, Sa3 based on the control signal 204.

The first and second control subunits 210A, 210B are connected to each other such that the control signals of the main switches and the auxiliary switches can be synchronized, as exemplarily shown in Fig. 4.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: power generator
- 20: three phase grid
- 100: DC to AC inverter
- 102: inverter component
- 104: filter component
- 110: primary side
- 112A, 112B: primary side DC input line
- 120: secondary side
- 122A, 122B, 122C: secondary side phase outputs
- 132A, 132B, 132C: filter capacitor, capacitive element
- 142A, 142B, 142C: auxiliary switch
- 150: return line
- 200: control unit
- 202: control signal for main switches
- 204: control signal for auxiliary switches
- 210A, 210B: first/second control subunit
- 212: status signal for main switches
- 214: status signal for auxiliary switches

## Claims

1. A direct current, DC, to alternating current, AC, inverter (100) for inverting a direct current of a power generator (10) to a three-phase alternating current of a three-phase grid (20), comprising:
a primary side (110) with a first DC input line (112A) and a second DC input line (112B);
a secondary side (120) with a first AC output phase (122A), a second AC output phase (122B), and a third AC output phase (122C); and
a filter component (104) for connecting the secondary side (120) to the primary side (110) via a return line (150);
wherein the filter component comprises a first capacitive element (132A) and a first switching element (142A) connected to the return line;
wherein the first AC output phase (122A) is connected to the first capacitive element (132A) and the first switching element (142A).

2. The inverter (100) according to claim 1,
wherein the first capacitive element (132A) and the first switching element (142A) are connected in series.

3. The inverter (100) according to claim 1 or 2,
wherein the return line (150) is connected to the first DC input line (112A).

4. The inverter (100) according to claim 1 or 2,
wherein the return line (150) is connected to the second DC input line (112B).

5. The inverter (100) according to any one of the preceding claims,
wherein the filter component comprises a second capacitive element (132B) and a second switching element (142B) connected to the return line;
wherein the second AC output phase (122B) is connected to a second capacitive element (132B) and a second switching element (142B);
wherein the second capacitive element (132B) and the second switching element (142B) are connected in series.

6. The inverter (100) according to any one of the preceding claims,
wherein the filter component comprises a third capacitive element (132C) and a third switching element (142C) connected to the return line;
wherein the third AC output phase (122C) is connected to a third capacitive element (132C) and a third switching element (142C);
wherein the third capacitive element (132C) and the third switching element (142C) are connected in series.

7. The inverter (100) according to any one of the preceding claims,
further comprising a control unit (200);
wherein the control unit (200) comprises a first control subunit (210A) for controlling an inverter component (102) of the inverter (100) and a second control subunit (210B) for controlling the filter component (104);
wherein the second control subunit (210B) is configured to control a switching status of the first switching element (142A).

8. The inverter (100) according to claim 7,
wherein the second control subunit (210B) is configured to control the switching status of the first switching element (142A) based on a voltage value of at least one of the first AC output phase (122A), second AC output phase (122B), and third AC output phase (122C).

9. The inverter (100) according to claim 7 or 8,
wherein the first control subunit (210A) is connected to the second control subunit (210B) and the control unit (200) is configured to synchronize a switching pattern of the first switching element (142A) with a switching pattern of the inverter component (102).

10. The inverter (100) according to any one of the claims 7 to 9,
wherein the control unit (200) is configured to periodically repeat the synchronized switching patterns of the inverter component (102) and the filter component (104).

11. The inverter (100) according to claim 6,
further comprising a control unit (200);
wherein the control unit (200) comprises a first control subunit (210A) for controlling an inverter component (102) of the inverter (100) and a second control subunit (210B) for controlling the filter component (104);
wherein the second control subunit (210B) is configured to control a switching status of the filter component (104) such that at a given time t during an operation status of the inverter (100) at most two switches of the first switching element (142A), the second switching element (142B), and the third switching element (142C) are in a closed state.

12. The inverter (100) according to claim 11,
wherein the second control subunit (210) is configured to control the switching status of the filter component (104) such that at any given time t during an operation status of the inverter (100) at least one switch of the first switching element (142A), the second switching element (142B), and the third switching element (142C) is in an opened state.
